# FASCICULE DE BREVET EUROPEEN

(11) **EP 1 651 878 B1**
(45) Date de publication et mention de la délivrance du brevet: **27.08.2008**
(21) Numéro de dépôt: 04767457.7
(22) Date de dépôt: 25.06.2004
(51) Int. Cl.: F16D 7/02, F16D 43/21, F16D 41/07, F16D 41/20

(54) **DISPOSITIF DE PALIER A ROUE LIBRE AVEC LIMITEUR DE COUPLE**
FREILAUFLAGERVORRICHTUNG MIT DREHMOMENTBEGRENZER
FREEWHEEL BEARING DEVICE WITH TORQUE LIMITER

(30) Priorité: 28.07.2003 FR 0309239
(43) Date de publication de la demande: 03.05.2006
(73) Titulaire: SKF FRANCE, 78180 Montigny-le-Bretonneux (FR)
(72) Inventeur: PONSON, Frédéric, F-37230 Luynes (FR); POULLE, Thierry, F-37370 Neuvy Le Roi (FR); HAMADA, Virginie, F-37000 Tours (FR); LESCORAIL, Romuald, 37540 ST Cyt Sur Loir (FR); CAILLAULT, Claude, F-37000 Tours (FR)
(74) Mandataire: Casalonga, Axel
(86) Numéro de dépôt international: PCT/FR2004/001609
(87) Numéro de publication internationale: WO 2005/021991

(56) Documents cités:
- WO-A-00/00755
- DE-C- 916 370
- GB-A- 2 259 962
- US-A- 4 494 637
- US-A1- 2002 112 555

## Description

La présente invention concerne le domaine des paliers comportant un embrayage unidirectionnel ou roue libre, généralement interposé entre un élément intérieur et un élément extérieur.

La roue libre permet de transmettre un couple dans un sens et d'autoriser une rotation relative dans l'autre sens. Un palier peut être également interposé entre l'élément intérieur et l'élément extérieur pour supporter des charges radiales et éventuellement axiales. Le document FR A 2 726 059 décrit un dispositif de ce genre.

On connaît, par ailleurs, le document GB-A-2 259 962 qui décrit un limiteur de couple permettant de limiter le couple à des valeurs différentes selon le sens de rotation d'une bague par rapport à l'autre bague, au moyen de billes de friction dans un sens, et d'un ressort dans l'autre sens.

Or, il serait bénéfique de limiter le couple transmis par une roue libre lorsque la roue libre est en position de blocage, notamment pour diminuer les sollicitations subies par d'autres éléments mobiles, et réduire leur fatigue. Le document FR A 2 615 568 décrit un lanceur de démarreur à roue libre comportant un limiteur de couple. Un tel lanceur est toutefois relativement encombrant.

L'invention propose de limiter le couple transmis par une roue libre de façon simple et compacte.

L'invention propose un dispositif de roue libre à limiteur de couple facile à transporter et à manipuler et à intégrer dans un ensemble mécanique.

Le dispositif de roue libre, selon un aspect de l'invention, est du type comprenant un élément extérieur, un élément intérieur disposé dans l'élément extérieur, et une roue libre pourvue d'au moins un élément de coincement, disposée entre l'élément intérieur et l'élément extérieur pour laisser libre un mouvement de rotation dans un sens entre l'élément extérieur et l'élément intérieur et pour transmettre un couple dans l'autre sens entre l'élément extérieur et l'élément intérieur. La roue libre comprend une bague pourvue d'une surface intérieure cylindrique et d'une surface extérieure cylindrique, sensiblement alignées sur un plan radial perpendiculaire à l'axe de rotation du dispositif, et un organe limiteur de couple apte à limiter le couple transmis par la roue libre, l'organe limiteur de couple étant disposé radialement entre ladite bague et l'élément extérieur ou l'élément intérieur au contact de ladite bague et dudit élément.

Une piste de glissement peut être formée sur la surface intérieure cylindrique ou la surface extérieure cylindrique, l'organe limiteur de couple étant disposé en contact avec la surface extérieure cylindrique ou la surface intérieure cylindrique respectivement. La roue libre et l'organe limiteur de couple sont ainsi associés de façon peu encombrante.

L'invention peut utiliser tout type de roue libre connu à cames basculantes, à rouleaux, à ressort, ou à cliquet.

Dans un mode de réalisation de l'invention, l'organe limiteur de couple est monté en série avec la roue libre pour limiter le couple transmis par l'organe d'engagement unidirectionnel en position de transmission de couple.

Dans un mode de réalisation de l'invention, l'organe limiteur de couple comprend au moins un élément de friction. L'élément de friction peut comprendre une surface radiale de friction. L'élément de friction peut comprendre une surface axiale de friction délimitée par deux plans radiaux.

Le dispositif comprend un palier permettant à l'élément extérieur de tourner par rapport à l'élément intérieur. Le palier est un palier à roulement. Des pistes de roulement pour des éléments roulants dudit palier sont ménagées dans les éléments intérieur et extérieur. Alternativement, les pistes de roulement sont ménagées dans des bagues intérieure et extérieure solidaire des éléments intérieur et extérieur.

Dans un mode de réalisation de l'invention, l'organe limiteur de couple est disposé sur une surface extérieure de la roue libre.

Dans un autre mode de réalisation de l'invention, l'organe limiteur de couple est disposé dans un alésage de la roue libre.

Dans un mode de réalisation de l'invention, l'organe limiteur de couple comprend un anneau élastique ouvert pourvu d'une surface extérieure de frottement et d'une surface intérieure de frottement. L'anneau peut être réalisé en tôle d'acier et peut présenter une section en U pourvue de deux ailes axiales.

Dans un mode de réalisation de l'invention, l'organe limiteur de couple comprend une pluralité de languettes élastiques de frottement.

Dans un autre mode de réalisation de l'invention, l'organe limiteur de couple comprend un anneau élastique en matériau synthétique pourvu d'une surface extérieure ou intérieure de frottement et d'une surface respectivement intérieure ou extérieure de fixation.

Dans un mode de réalisation de l'invention, l'organe limiteur de couple comprend au moins un anneau de friction et une rondelle élastique de mise en appui axial de l'anneau de friction sur une surface de friction. L'organe limiteur de couple peut comprendre deux anneaux de friction entre lesquels est montée ladite rondelle élastique. Les anneaux de friction peuvent présenter des surfaces radiales de friction.

Dans un mode de réalisation de l'invention, l'organe limiteur de couple comprend un corps en forme d'anneau ouvert. La bague de la roue libre et le corps de l'organe limiteur de couple peuvent être constitués par un seul élément dont la surface extérieure est en contact avec l'élément extérieur avec frottement en cas de rotation angulaire, et dont la surface intérieure coopère avec l'élément de coincement, ou dont la surface intérieure est en contact avec l'élément intérieur avec frottement en cas de rotation angulaire, et dont la surface extérieure coopère avec l'élément de coincement.

Dans un mode de réalisation de l'invention, l'organe limiteur de couple comprend, en outre, un élément élastique de mise en précontrainte dudit corps. L'élément élastique peut être un anneau du type circlips.

Dans un mode de réalisation de l'invention, la roue libre comprend un ressort pourvu d'une extrémité solidaire de l'organe limiteur de couple et de spires en contact de frottement sur l'élément intérieur ou extérieur.

Dans un mode de réalisation de l'invention, les éléments de coincement de la roue libre sont des cames, des rouleaux ou des cliquets.

Dans un mode de réalisation de l'invention, l'organe limiteur de couple comprend un élément de friction et un élément de mise en précontrainte de l'élément de friction contre ladite bague et/ou l'élément extérieur ou l'élément intérieur. Plus particulièrement, l'élément de friction peut être mis en précontrainte entre ladite bague et l'élément extérieur, entre ladite bague et l'élément intérieur, entre deux surfaces solidaires de l'élément extérieur, ou encore entre deux surfaces solidaires de l'élément intérieur. L'élément de mise en précontrainte est, avantageusement, une pièce distincte de l'élément de friction.

Dans un mode de réalisation de l'invention, l'organe limiteur de couple est en précontrainte entre deux pièces distinctes dans des directions opposées. Plus particulièrement, l'organe limiteur de couple peut être en précontrainte radialement vers l'extérieur contre l'élément extérieur et radialement vers l'intérieur contre ladite bague, radialement vers l'extérieur contre ladite bague et radialement vers l'intérieur contre l'élément intérieur, ou axialement contre deux surfaces opposées solidaires de l'élément extérieur ou de l'élément intérieur.

On entend ici par roue libre un dispositif de transmission d'un couple dans un sens et de rotation relative dans l'autre sens, avec éventuellement un couple de traînée résiduel négligeable en conditions normales de fonctionnement, entre un élément d'entrée et un élément de sortie du dispositif.

Grâce à l'invention, on limite l'encombrement du dispositif qui se présente sous la forme d'une cartouche compacte prémontée relativement bien protégée contre les éléments extérieurs. La durée de vie des pièces mobiles en amont et en aval de la roue libre est allongée grâce à l'écrêtement des pics de couple, d'où une économie de fonctionnement et une réduction du risque de bris.

L'invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'un dispositif de roue libre selon un premier mode de réalisation de l'invention ;
- la figure 2 est une vue de détail de la figure 1 ;
- la figure 3 est une vue en coupe transversale selon un plan passant par les éléments de coincement du dispositif de la figure 1 ;
- la figure 4 est une vue de détail de la figure 3 ;
- la figure 5 est une vue en coupe axiale d'un dispositif de roue libre selon un deuxième mode de réalisation de l'invention ;
- la figure 6 est une vue de détail de la figure 5 ;
- la figure 7 est une vue en coupe axiale d'un dispositif de roue libre selon un troisième mode de réalisation ;
- la figure 8 est une vue en coupe axiale d'un dispositif de roue libre selon un quatrième mode de réalisation de l'invention ;
- la figure 9 est une vue de détail du dispositif de roue libre de la figure 8 pris en coupe transversale selon un plan passant par les éléments de coincement ;
- la figure 10 est une vue de détail de la figure 8 ;
- la figure 11 est une vue en coupe axiale d'un dispositif de roue libre selon un cinquième mode de réalisation de l'invention;
- la figure 12 est une vue de détail du dispositif de roue libre de la figure 11 pris en coupe transversale selon un plan passant par les éléments de coincement ;
- la figure 13 est une vue de détail de la figure 11 ;
- la figure 14 est une vue en coupe selon XIV-XIV de la figure 15 d'un dispositif de roue libre selon un sixième mode de réalisation de l'invention ;
- la figure 15 est une vue en coupe selon XV-XV de la figure 14 ; et
- la figure 16 est une vue de détail de la figure 15.

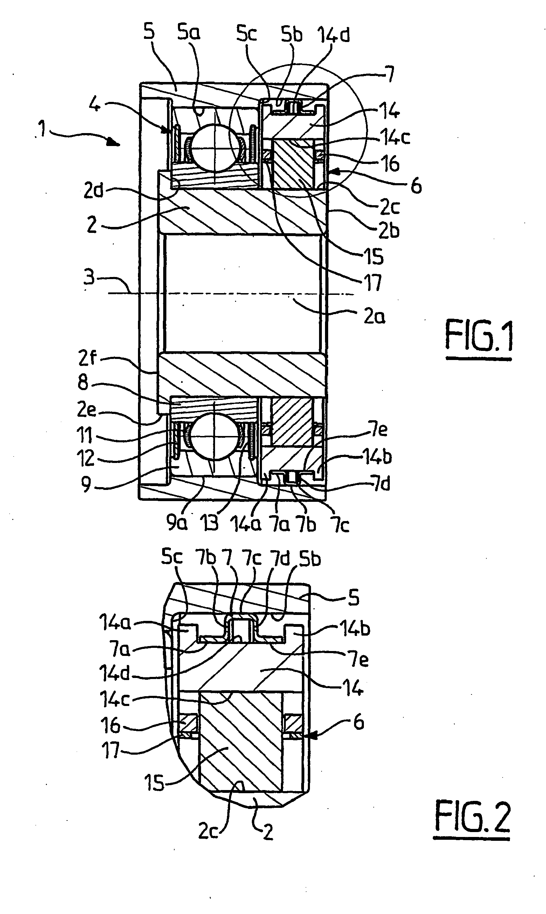

Comme on peut le voir sur les figures 1 à 4, le dispositif de roue libre, référencé 1 dans son ensemble; comprend un manchon tubulaire 2 d'axe 3, un palier à roulement 4 monté sur le manchon 2, un élément extérieur 5 monté sur le roulement 4, une roue libre 6 montée sur le manchon 2 et un élément de friction 7 monté entre l'élément extérieur 5 et la roue libre 6.

Le manchon 2 comprend un alésage 2a, une surface radiale frontale 2b, une surface extérieure cylindrique 2c s'étendant sur la majeure partie de sa longueur à partir de la surface radiale d'extrémité 2b, une surface radiale 2d s'étendant vers l'extérieur à partir de l'extrémité de la surface extérieure cylindrique 2c, une surface axiale 2e de faible longueur s'étendant à partir de l'extrémité libre de la portion radiale 2d, axialement à l'opposé de la surface radiale d'extrémité 2b, et une surface radiale d'extrémité 2f opposée à la surface radiale d'extrémité 2b.

Le roulement 4 peut être de type standard, à faible coût de fabrication et comprend une bague intérieure massive 8 pourvue d'un alésage monté, par exemple par emmanchement, sur la surface cylindrique extérieure 2c du manchon 2, et en contact avec la portion radiale 2d, une bague extérieure massive 9, une rangée d'éléments roulants 10, ici des billes, disposés entre une piste de roulement de la bague intérieure 8 et une piste de roulement de la bague extérieure 9, une cage 11 de maintien de l'espacement circonférentiel des éléments roulants 10 et des joints d'étanchéité 12 et 13 solidaires de la bague extérieure 9 et frottant sur une portée cylindrique de la bague intérieure 8, disposés d'un côté et de l'autre de la rangée d'éléments roulants 10 pour empêcher l'intrusion d'éléments étrangers à proximité des éléments roulants 10 et pour conserver un produit lubrifiant tel que de la graisse à l'intérieur du roulement et à proximité des éléments roulants 10. La bague extérieure 9 est pourvue d'une surface cylindrique extérieure 9a, coaxiale à la surface cylindrique extérieure 2c du manchon 2.

L'élément extérieur 5 comprend un alésage central 5a monté, par exemple par emmanchement, sur la surface cylindrique extérieure 9a de la bague extérieure 9. Le palier à roulement 4 assure ainsi la liberté de rotation de l'élément extérieur 5 par rapport au manchon 2, et la reprise des efforts radiaux. L'élément extérieur 5 comprend en outre un alésage 5b, de diamètre très légèrement supérieur à l' alésage central 5a, et disposé à l'extrémité axiale de l'élément extérieur 5 située à l'opposé du support 4. Le roulement 4 et l'élément extérieur 5 sont asymétriques par rapport à un plan radial passant par le centre des éléments roulants 10. Une surface radiale annulaire 5c est formée entre les alésages 5a et 5b.

La roue libre 6, montée adjacente au palier à roulement 4, comprend une bague extérieure 14, par exemple de type massive, dont l'alésage forme une piste de glissement 14c, une rangée d'éléments de coincement 15, ici des cames, une cage 16 pourvue de fenêtres dans lesquelles sont disposés les éléments de coincement 15 sous la forme de cames et un ressort 17 de rappel des éléments de coincement 15 maintenant lesdits éléments de coincement en contact permanent avec les pistes. Les éléments de coincement 15 sont disposés radialement entre la surface cylindrique extérieure 2c du manchon 2 et la piste 14c de la bague extérieure 14 axialement entre le palier à roulement 4 et la surface radiale 2b d'extrémité du manchon 2,

Entre la périphérie de la bague extérieure 14 et l'alésage 5b de l'élément extérieur 5, subsiste un espace radial dans lequel est disposé l'élément de friction 7. Plus précisément, la bague extérieure 14 comprend deux nervures circulaires 14a, 14b, dirigées radialement vers l'extérieur. Les nervures 14a et 14b sont disposées axialement aux extrémités de la bague extérieure 14 en étant alignées avec les surfaces radiales d'extrémités de la bague extérieure 14 et entourent une surface axiale extérieure 14d de la bague extérieure 14. L'élément de friction 7 est disposé entre les nervures 14a et 14b et est ainsi solidaire axialement de la bague extérieure 14.

L'élément de friction 7 se présente sous la forme d'un anneau ouvert sur un faible secteur angulaire, par exemple de l'ordre de quelques degrés. L'élément de friction 7 présente en section droite axiale une forme de U pourvue de deux ailes axiales et peut être réalisé en tôle roulée. En d'autres termes, l'élément de friction 7, en section axiale, comprend une portion axiale 7a de faible diamètre, une portion radiale 7b s'étendant vers l'extérieur à partir d'une extrémité de la portion axiale 7a, une portion axiale 7c s'étendant à l'opposé de la section axiale 7a à partir de l'extrémité de grand diamètre de la portion radiale 7b, une portion radiale 7d s'étendant vers l'intérieur à partir de l'extrémité libre de la portion axiale 7c et une portion axiale 7e s'étendant à l'opposé de la portion axiale 7a à partir de l'extrémité de petit diamètre de la portion radiale 7b. Les portions axiales 7a et 7e présentent un diamètre sensiblement identique et sont en contact avec la surface extérieure de la bague massive 14, l'extrémité libre de la portion axiale 7a étant disposée à proximité de la nervure 14a et l'extrémité libre de la portion axiale 7e étant disposée à proximité de la nervure 14b. L'élément de friction 7 est symétrique par rapport à un plan radial passant par le milieu de la portion axiale 7c. La portion axiale 7c est en contact avec l'alésage 9b de l'élément extérieur 5. L'élément de friction 7 peut être pourvu d'un revêtement local ou général pour améliorer ses propriétés de friction ou anti-corrosion.

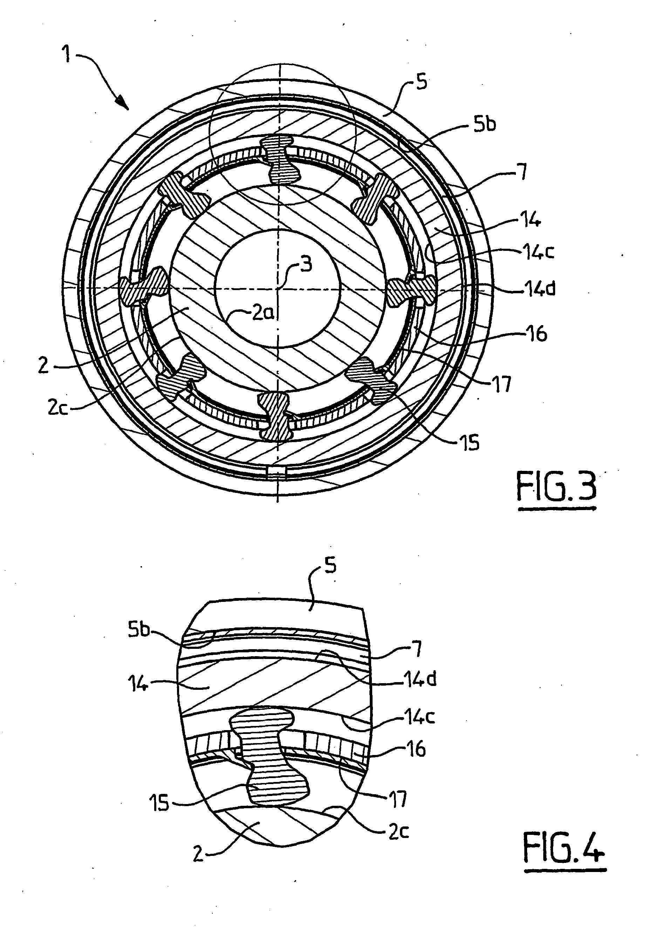

Le fonctionnement du dispositif sera mieux compris d'après la figure 3. Lorsque l'élément extérieur 5 tourne dans le sens anti-horaire par rapport au manchon 2, la roue libre 6 est en position de roue libre avec les éléments de coincement 15 en position basculée, frottant sur la surface extérieure cylindrique 2c du manchon 2 et/ou sur la piste 14c de la bague extérieure 14. Le manchon 2 est seulement soumis au couple de traînée du palier à roulement 4 et de la roue libre 6. L'élément de friction 7 entraîne la bague extérieure 14 à la même vitesse que l'élément extérieur 5.

Lorsque l'élément extérieur 5 tourne dans le sens horaire par rapport au manchon 2, la roue libre 6 se met en position de blocage, les cames de coincement 15 prenant appui sur la surface extérieure cylindrique 2c du manchon 2 et sur la piste 14c de la bague massive 14. Le manchon 2 est donc soumis à un couple qui peut être élevé et qui tend à le faire tourner dans le sens horaire. Toutefois, lorsque le couple transmis de l'élément extérieur 5 à l'élément de friction 7, de l'élément de friction 7 à la roue libre 6 et de la roue libre 6 au manchon 2, dépasse un seuil prédéterminé, l'élément de friction 7 se met à glisser, par rapport à la bague massive 14 et/ou par rapport à l'élément extérieur 5, et assure ainsi un écrêtement du couple transmis à l'élément extérieur 5. Le seuil prédéterminé de couple peut être choisi au montage et dépend des caractéristiques de l'élément de friction et des surfaces avec lesquelles ledit élément de friction est en contact.

Par analogie avec un système électrique, l'ensemble formé par la roue libre 6 et l'élément de friction 7 limiteur de couple, peut être vu comme une diode Zener qui autorise librement le passage du courant électrique dans un sens et l'interdit dans l'autre jusqu'à ce qu'une certaine tension soit atteinte, tension au-delà de laquelle le courant peut à nouveau passer librement.

Ainsi, la mise en série de l'élément de friction 7 et de la roue libre 6 permet, d'une part, d'autoriser une rotation libre dans un sens, et d'interdire la rotation dans le sens opposé dans la limite d'un couple maximal au-delà duquel la rotation est à nouveau autorisée avec en sus des pertes par frottement de l'élément de friction 7 sur la bague extérieure 14 et sur l'alésage 5b de l'élément extérieur 5.

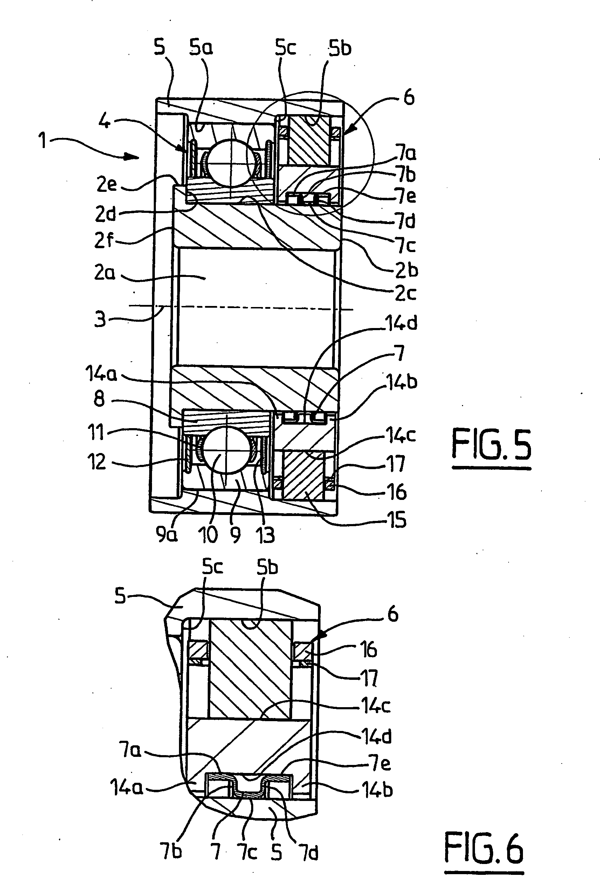

Le mode de réalisation illustré sur les figures 5 et 6 est semblable aux précédents, à ceci près que les dispositions relatives de la roue libre 6 et de l'élément de friction 7 ont été inversées, l'élément de friction 7 est disposé entre la surface extérieure cylindrique 2c du manchon 2 et la bague massive 14 intérieure de la roue libre 6. Les éléments de coincement 15 sont disposés entre la piste 14c formée sur la surface cylindrique extérieure de la bague massive 14 et l'alésage 5b de l'élément extérieur 5. Le fonctionnement est semblable, à ceci près que la roue libre 6, en position de coincement, est solidaire de l'élément extérieur 5 et peut se déplacer angulairement par rapport au manchon 2 par glissement de l'élément de friction 7.

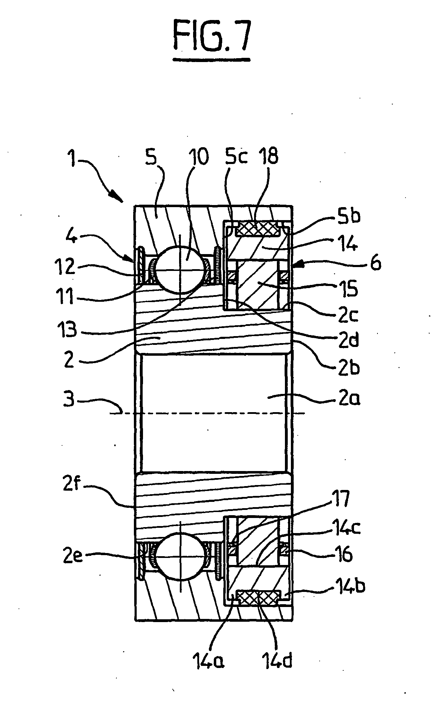

Le mode de réalisation illustré sur la figure 7 est à rapprocher de celui illustré sur les figures 1 à 4, à ceci près que l'élément de friction 7 est remplacé par un élément de friction 18 circonférentiellement continu fixé, par exemple par surmoulage, sur la bague extérieure 14 de la roue libre 6 entre les nervures 14a et 14b et radialement en saillie vers l'extérieur. L'élément de friction 18 est réalisé en matériau synthétique. Le choix du matériau et la précontrainte radiale de l'élément de friction 18 entre la bague massive 14 et l'alésage 5b de l'élément extérieur 5 déterminent le couple de friction et donc le couple maximum transmissible entre l'élément extérieur 5 et le manchon 2. Des pistes de roulement pour les éléments roulants 10 sont ménagées directement sur le manchon 2 et sur l'élément extérieur 5, respectivement à partir des surfaces 2e et 5a. La surface axiale 2e présente une longueur axiale accrue par rapport aux modes de réalisation précédents. En d'autres termes, les bagues de roulement sont monobloc avec le manchon 2 et l'élément extérieur 5 respectivement.

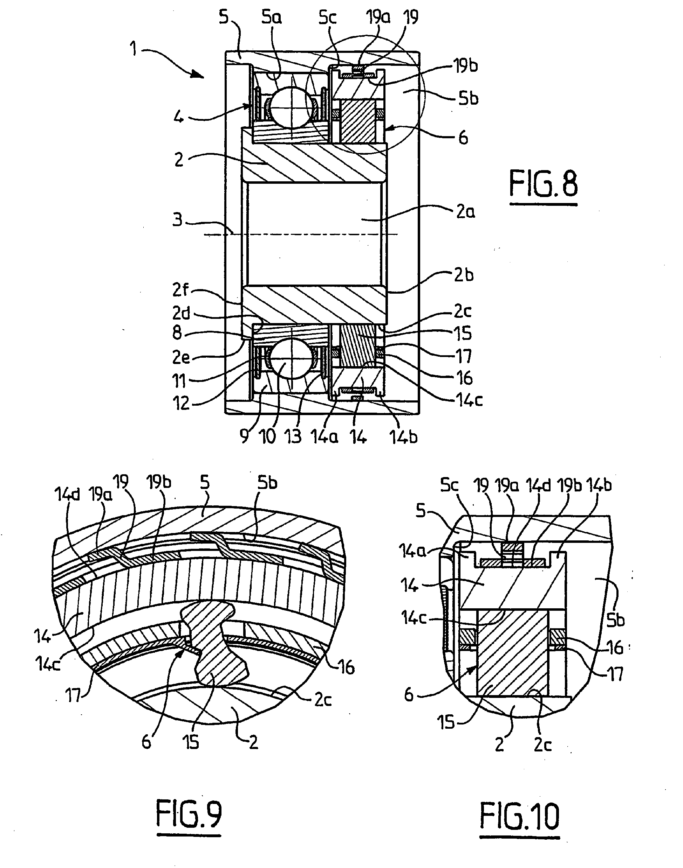

Le mode de réalisation illustré sur les figures 8 à 10 est semblable à celui illustré sur les figures 1 à 4, à ceci près que l'élément de friction 7 est remplacé par un élément de friction 19 se présentant sous la forme d'un anneau en tôle comprenant des languettes 19a radialement élastiques issues du corps 19b de l'anneau. L'anneau peut être circonférentiellement continu ou se présenter sous la forme d'une bande coupée à bonne longueur et roulée sur elle-même avec ses deux extrémités bout à bout. Le corps 19b de l'élément de friction 19 est disposé en contact avec la bague massive 14 entre les nervures 14a et 14b, tandis que les languettes 19a, en saillie radialement vers l'extérieur, sont en contact avec l'alésage 9b du élément extérieur 5.

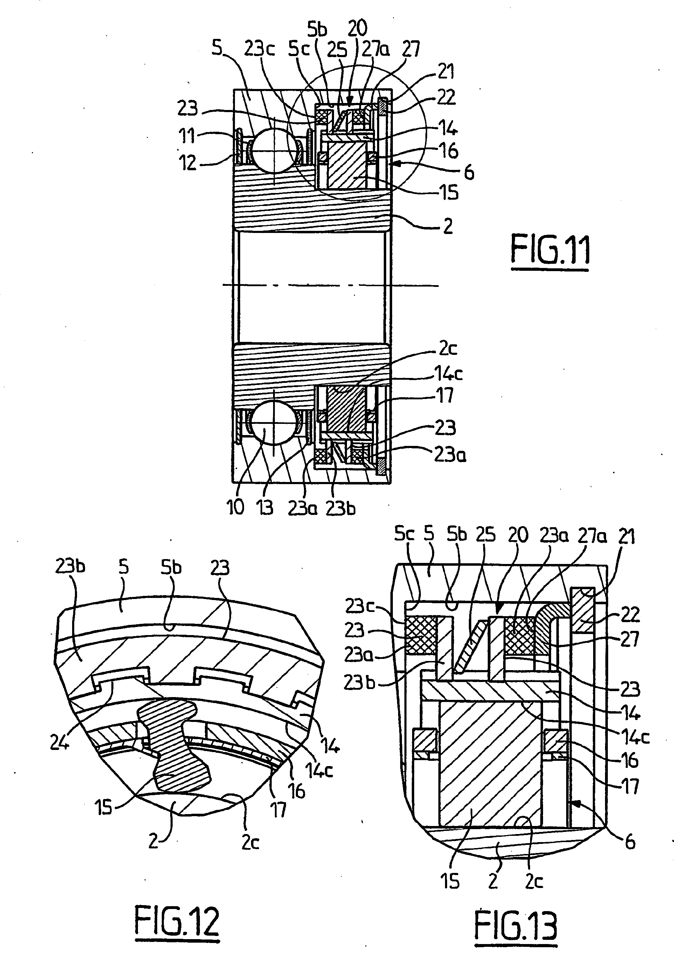

Dans le mode de réalisation illustré sur les figures 11 et 12, l'élément de friction 7 est remplacé par un dispositif de friction 20 à action axiale. La bague massive 14 de la roue libre 6 est d'épaisseur radiale réduite pour laisser un espace plus important au dispositif de limitation de couple 20 et est pourvue d'une surface extérieure axiale. En outre, une rainure 21 est formée dans l'alésage 5b de l'élément extérieur 5 pour y loger un circlips 22, à proximité de l'extrémité libre de l'alésage 5b.

Le dispositif de limitation de couple 20 qui entoure la bague massive 14 comprend deux anneaux de friction 23 comprenant une portion de friction 23a réalisée en matériau synthétique et une portion de support 23b, par exemple sous la forme d'une rondelle plate métallique. Les portions de friction 23a sont solidarisées à la portion de support 23b par exemple par collage ou surmoulage. Les anneaux de friction 23 sont solidaires en rotation de la bague extérieure 14 de la roue libre 6 par des moyens tels que des cannelures axiales 24 coopérant avec l'alésage des portions de support 23b de forme concordante. Les anneaux de friction 23 peuvent se déplacer axialement par rapport à la bague massive 14. Entre les deux anneaux de friction 23, est disposée une rondelle à action axiale 25, du type rondelle Belleville ou encore de type ondulé. Le dispositif de limitation de couple 20 comprend en outre un anneau 27 en forme de coupelle à section en L, emmanché dans l'alésage 5b de l'élément extérieur 5 et axialement en contact de butée contre le circlips 22 disposé dans la rainure 21. L'anneau 27 comporte une surface radiale de friction 27a.

Les portions de friction 23a des anneaux de friction 23 présentent des surfaces radiales de friction 23c, l'une en contact avec l'anneau 27, et l'autre en contact avec une surface radiale 5c de l'élément extérieur 5 formant un épaulement entre les alésages 5a et 5b. Les anneaux de friction 23 sont donc mis en appui élastique contre les surfaces de friction correspondantes de l'élément extérieur 5 et de l'anneau 27 solidaire de l'élément extérieur 5. Le choix du matériau des anneaux de friction 23 et de la précontrainte axiale des anneaux par la rondelle 25 détermine le couple de friction et le seuil de couple maximal transmissible. Bien entendu, on pourrait prévoir une variante comprenant deux rondelles 25 ou encore un seul anneau 23 et une seule rondelle 25.

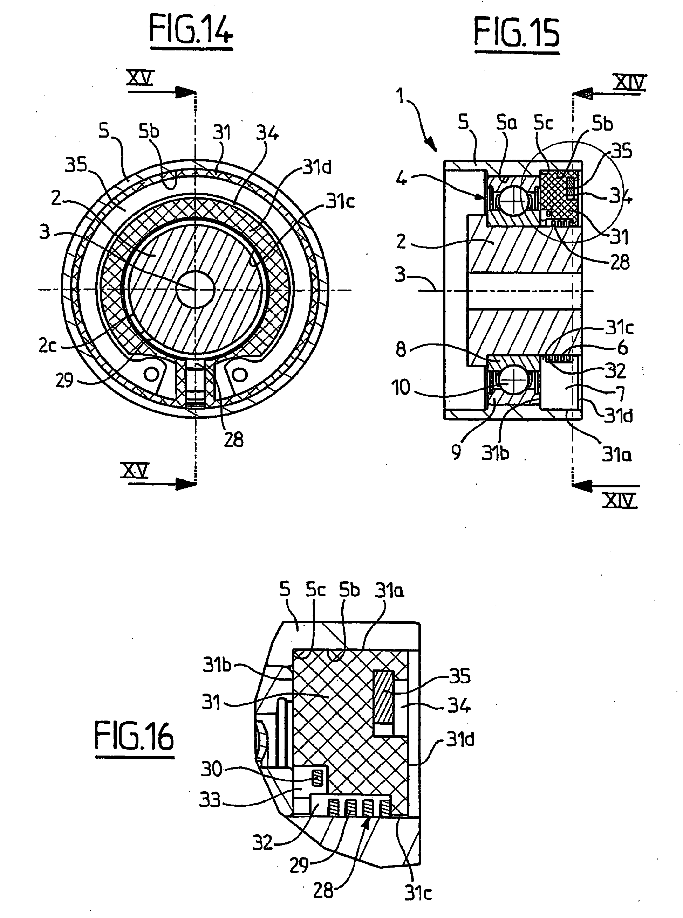

Le mode de réalisation illustré sur les figures 14 à 16 est proche de celui illustré sur les figures 1 à 4, à ceci près que la roue libre 6 comprend un ressort 28 pourvu de spires 29 en contact avec la surface extérieure 2c du manchon 2 et d'une extrémité 30 en saillie vers l'extérieur. L'élément de friction 7 comprend un corps 31 en forme d'anneau ouvert réalisé en matériau synthétique et pourvu d'une surface extérieure axiale 31a en contact avec l'alésage 5b de l'élément extérieur 5, une surface radiale 31b se raccordant à la surface axiale 31a, dirigée vers l'intérieur et en contact avec l'épaulement 5c de l'élément extérieur 5 et avec une surface radiale frontale de la bague extérieure 9 du palier à roulement 4, une surface axiale d'alésage 31c ajustée sur la surface extérieure 2c du manchon 2 et une surface radiale 31d disposée à l'opposé de la surface radiale 31b et joignant les surfaces axiales intérieure 31c et extérieure 31a. Vu en section transversale, le corps 31 présente une forme générale rectangulaire.

Toutefois, dans la surface axiale intérieure 31c est ménagée un logement annulaire 32 disposée sensiblement au centre du corps 31 dans le sens axial. En outre, une encoche 33 occupant un faible secteur angulaire est ménagée entre le logement 32 et la surface radiale 31b en contact avec le palier à roulement 4. L'encoche 33 débouche sur une surface radiale frontale de la bague intérieure 8 du palier à roulement 4. Les spires 29 du ressort 28 sont logées dans le logement annulaire 32 tandis que l'extrémité 30 en saillie vers l'extérieur est logée dans l'encoche 33.

Ainsi, l'une des extrémités libres du ressort 28 est solidaire en rotation du corps 31 tandis que les spires 29 sont en contact avec frottement sur la surface extérieure axiale 2c du manchon 2. Il en résulte que dans un sens de rotation relative entre le manchon 2 et le corps 31, le ressort tend à serrer et solidarise angulairement ledit manchon 2 et ledit corps 31. Au contraire, dans le sens de rotation relative opposé, les spires 29 ont tendance à se desserrer. Le manchon 2 et le corps 31 peuvent tourner librement l'un par rapport à l'autre dans ledit sens de rotation relative avec un léger frottement des spires 29 sur le surface axiale extérieure 2c du manchon 2.

Le corps 31 comprend en outre une autre rainure annulaire 34 ménagée à partir de la surface radiale 31d disposée à l'opposé du palier à roulement 4 et présentant un fond légèrement plus étendu radialement que l'entrée de ladite rainure 34. Un circlips 35 est disposé dans le fond de la rainure 34 en étant radialement rétreint temporairement lors de son montage. La rainure 34 est dimensionnée de telle sorte que lorsque le circlips 35 est en place dans le fond de la rainure 34, ledit circlips 35 exerce sur le corps 31 un effort radial vers l'extérieur. Le corps 31 étant radialement déformable de par le matériau utilisé et du fait que ledit corps 31 soit un anneau ouvert, la surface extérieure 31a du corps 31 est précontrainte radialement sur l'alésage 5b de l'élément extérieur 5, ce qui garantit la solidarisation du corps 31 et de l'élément extérieur 5 jusqu'à un certain couple qui peut être déterminé par les dimensions de l'élément extérieur 5, du corps 31 et du circlips 35 ainsi que par leurs matériaux constitutifs.

En d'autres termes, le corps 31 forme un élément unique faisant partie à la fois de la roue libre 6 et de l'élément de friction 7. En effet, le logement annulaire 32 et l'encoche 33 coopèrent avec le ressort 28, et la surface extérieure axiale 31a est en contact avec l'alésage 5b de l'élément extérieur 5 avec possibilité de glisser angulairement par rapport audit alésage 5b en cas de couple trop élevé.

Ainsi, en fonctionnement de prise de couple, au-delà d'une certaine valeur de couple, le corps 31 de l'élément de friction 7 se met à tourner par rapport à l'élément extérieur 5, limitant ainsi à la valeur prédéterminée le couple transmis.

Les modes de réalisation illustrés concernent des roues libres dont les éléments de coincement sont des cames ou un ressort. Bien entendu, l'invention pourrait également fonctionner avec une roue libre dont le ou les éléments de coincement sont un ou des cliquets coopérant avec une piste crantée.

Grâce à l'invention, on accroît la longévité de la roue libre et des organes mécaniques montés en amont ou en aval par le filtrage des pics de couple effectué par l'organe de friction. La bague de la roue libre coopère également avec l'organe de friction, d'où un ensemble particulièrement compact facile à transporter, à manipuler et à monter dans un ensemble mécanique, par exemple entre un logement cylindrique et un arbre.

## Revendications

1. Dispositif de palier à roue libre (1), comprenant un élément extérieur (5), un élément intérieur disposé dans l'élément extérieur, et une roue libre (6) pourvue d'au moins un élément de coincement (15), disposée entre l'élément intérieur et l'élément extérieur pour laisser libre un mouvement de rotation dans un sens entre l'élément extérieur et l'élément intérieur et pour transmettre un couple dans l'autre sens entre l'élément extérieur et l'élément intérieur, la roue libre (6) comprenant une bague (14) pourvue d'une surface intérieure cylindrique et d'une surface extérieure cylindrique (14d), sensiblement alignées sur un plan radial perpendiculaire à l'axe de rotation du dispositif, et un organe limiteur de couple apte à limiter le couple transmis par la roue libre, l'organe limiteur de couple étant disposé radialement entre ladite bague (14) et l'élément extérieur (5) ou l'élément intérieur au contact de ladite bague et dudit élément, **caractérisé par le fait qu'**il comprend un palier à roulement permettant à l'élément extérieur de tourner par rapport à l'élément intérieur, la roue libre étant adjacente au palier à roulement (4) monté sur l'élément intérieur, l'élément extérieur (5) élant monté sur le palier à roulement.

2. Dispositif selon la revendication 1, **caractérisé par le fait que** l'organe limiteur de couple est monté en série avec la roue libre (6) pour limiter le couple transmis par l'organe d'engagement unidirectionnel en position de transmission de couple.

3. Dispositif selon la revendication 1 ou 2, **caractérisé par le fait que** l'organe limiteur de couple comprend an moins un élément de friction (7).

4. Dispositif selon la revendication 3, **caractérisé par le fait que** l'élément de friction (20) comprend une surface radiale de friction (23a).

5. Dispositif selon la revendication 3, **caractérisé par le fait que** l'élément de friction (7) comprend une surface axiale de friction délimitée par deux plans radiaux.

6. Dispositif selon la revendication 1, **caractérisé par le fait que** des pistes de roulement pour des éléments roulants dudit palier sont ménagées dans les éléments intérieur et extérieur.

7. Dispositif selon l'une quelconque des revendications précédentes, **caractérisé par le fait que** l'organe limiteur de couple est disposé sur une surface extérieure (14d) de la roue libre.

8. Dispositif selon l'une quelconque des revendications 1 à 8, **caractérisé par le fait que** l'organe limiteur de couple est disposé dans un alésage de la roue libre.

9. Dispositif selon l'une quelconque des revendications précédentes, **caractérisé par le fait que** l'organe limiteur de couple comprend un anneau élastique ouvert pourvu d'une surface extérieure de frottement et d'une surface intérieure de frottement.

10. Dispositif selon la revendication 11, **caractérisé par le fait que** l'anneau est réalisé en tôle d'acier et présente une section en U pourvue de deux ailes axiales.

11. Dispositif selon l'une quelconque des revendications précédentes, **caractérisé par le fait que** l'organe limiteur de couple comprend une pluralité de languettes élastiques (19a).

12. Dispositif selon l'une quelconque des revendications précédentes, **caractérisé par le fait que** l'organe limiteur de couple comprend un anneau élastique (18) en matériau synthétique pourvu d'une surface extérieure ou intérieure de frottement et d'une surface respectivement intérieure ou extérieure de fixation.

13. Dispositif selon l'une quelconque des revendications précédentes, **caractérisé par le fait que** l'organe limiteur de couple comprend au moins un anneau de friction (23) et une rondelle élastique (25) de mise en appui axial de l'anneau de friction sur une surface de friction.

14. Dispositif selon l'une quelconque des revendications 1 à 9 **caractérisé par le fait que** l'organe limiteur de couple comprend un corps en forme d'anneau ouvert.

15. Dispositif selon la revendication 14, **caractérisé par le fait que** l'organe limiteur de couple comprend, en outre, un élément élastique de mise en précontrainte dudit corps.

16. Dispositif selon l'une quelconque des revendications précédentes, **caractérisé par le fait que** la roue libre comprend un ressort pourvu d'une extrémité solidaire de l'organe limiteur de couple et de spires en contact de frottement sur l'élément intérieur ou extérieur.

17. Dispositif selon l'une quelconque des revendications précédentes, **caractérisé par le fait que** les éléments de coincement de la roue libre sont des cames, des rouleaux ou des cliquets.

18. Dispositif selon l'une quelconque des revendications précédentes, **caractérisé par le fait que** l'organe limiteur de couple comprend un élément de friction et un élément de mise en précontrainte de l'élément de friction contre ladite bague (14) et/ou l'élément extérieur (5) ou l'élément intérieur.

19. Dispositif selon l'une quelconque des revendications précédentes, **caractérisé par le fait que** l'organe limiteur de couple est en précontrainte entre deux pièces distinctes.

## Claims

1. Freewheel bearing device (1), comprising an outer element (5), an inner element placed in the outer element, and a free wheel (6) provided with at least one jamming element (15), placed between the inner element and the outer element to leave free a rotation movement in one direction between the outer element and the inner element and to transmit a torque in the other direction between the outer element and the inner element, the free wheel (6) comprising a race (14) provided with an inner cylindrical surface and an outer cylindrical surface (14d), substantially aligned on a radial plane perpendicular to the axis of rotation of the device, and a torque limiter member capable of limiting the torque transmitted by the free wheel, the torque limiter member being placed radially between said race (14) and the outer element (5) or the inner element in contact with said race and said element, **characterized in that** it comprises a rolling bearing allowing the outer element to rotate relative to the inner element, the freewheel being adjacent to the rolling bearing (4) mounted on the inner element, the outer element (5) being mounted on the rolling bearing.

2. Device according to Claim 1, **characterized in that** the torque limiter member is mounted in series with the free wheel (6) to limit the torque transmitted by the unidirectional engagement member in the torque transmission position.

3. Device according to Claim 1 or 2, **characterized in that** the torque limiter member comprises at least one friction element (7).

4. Device according to Claim 3, **characterized in that** the friction element (20) comprises a radial friction surface (23a).

5. Device according to Claim 3, **characterized in that** the friction element (7) comprises an axial friction surface delimited by two radial planes.

6. Device according to Claim 1, **characterized in that** raceways for the rolling elements of said bearing are arranged in the inner and outer elements.

7. Device according to any one of the preceding claims, **characterized in that** the torque limiter member is placed on an outer surface (14d) of the free wheel.

8. Device according to any one of Claims 1 to 6, **characterized in that** the torque limiter member is placed in a bore of the free wheel.

9. Device according to any one of the preceding claims, **characterized in that** the torque limiter member comprises an open elastic ring provided with an outer friction surface and an inner friction surface.

10. Device according to Claim 9, **characterized in that** the ring is made of steel sheet and has a U-channel provided with two axial flanges.

11. Device according to any one of the preceding claims, **characterized in that** the torque limiter member comprises a plurality of elastic tongues (19a).

12. Device according to any one of the preceding claims, **characterized in that** the torque limiter member comprises an elastic ring (18) made of synthetic material provided with an outer or inner friction surface and a respectively inner or outer attachment surface.

13. Device according to any one of the preceding claims, **characterized in that** the torque limiter member comprises at least one friction ring (23) and an elastic washer (25) for placing the friction ring bearing axially on a friction surface.

14. Device according to any one of Claims 1 to 9, **characterized in that** the torque limiter member comprises a body in the shape of an open ring.

15. Device according to Claim 14, **characterized in that** the torque limiter member also comprises an elastic element for prestressing said body.

16. Device according to any one of the preceding claims, **characterized in that** the free wheel comprises a spring provided with an end fixedly attached to the torque limiter member and coils in friction contact on the inner or outer element.

17. Device according to any one of the preceding claims, **characterized in that** the jamming elements of the free wheel are cams, rollers or pawls.

18. Device according to any one of the preceding claims, **characterized in that** the torque limiter member comprises a friction element and an element for prestressing the friction element against said race (14) and/or the outer element (5) or the inner element.

19. Device according to any one of the preceding claims, **characterized in that** the torque limiter member is prestressed between two separate pieces.

## Patentansprüche

1. Freilauflageranordnung (1), zu der gehören: ein äußeres Element (5), ein in dem äußeren Element angeordnetes inneres Element und eine Freilaufeinrichtung (6), die wenigstens einen zwischen dem inneren Element und dem äußeren Element angeordnetes Klemmkörper (15) aufweist, das dazu dient, eine in einer Richtung eine Drehbewegung zwischen dem äußeren Element und dem inneren Element zuzulassen und in der anderen Richtung ein Drehmoment zwischen dem äußeren Element und dem inneren Element zu übertragen, wobei die Freilaufeinrichtung (6) einen Ring (14), der mit einer zylindrischen Innenfläche und einer zylindrischen Außenfläche (14d) versehen ist, die im Wesentlichen auf eine zu einer Rotationsachse der Anordnung rechtwinkeligen Radialebene ausgerichtet sind, und ein Drehmomentbegrenzungselement aufweist, das dazu eingerichtet ist, das durch die Freilaufeinrichtung übertragene Drehmoment zu begrenzen, wobei das Drehmomentbegrenzungselement in radialer Richtung zwischen dem Ring (14) und dem äußeren Element (5) oder dem inneren Element mit diesem Ring und dem jeweiligen Element in Berührung stehend angeordnet ist, **dadurch gekennzeichnet, dass** sie ein Wälzlager enthält, das es dem äußeren Element erlaubt sich relativ zu dem inneren Element zu drehen, wobei die Freilaufeinrichtung neben dem Wälzlager (4) angeordnet ist, das auf dem inneren Element (5) sitzt, und das äußere Element (5) auf dem Wälzlager gelagert ist.

2. Anordnung nach Anspruch 1, **dadurch gekennzeichnet, dass** das Drehmomentbegrenzungselement mit der Freilaufeinrichtung (6) hintereinander liegend angeordnet ist, um das Drehmoment zu begrenzen, das durch das in nur eine Richtung wirkende Eingriffselement in der Drehmomentübertragungsstellung übertragen wird.

3. Anordnung nach Anspruch 1 oder 2, **dadurch gekennzeichnet, dass** das Drehmomentbegrenzungselement wenigstens ein Reibelement (7) enthält.

4. Anordnung nach Anspruch 3, **dadurch gekennzeichnet, dass** das Reibelement (20) eine radiale Reibfläche (23a) aufweist.

5. Anordnung nach Anspruch 3, **dadurch gekennzeichnet, dass** das Reibelement (7) eine durch zwei Radialebenen begrenzte axiale Reibfläche aufweist.

6. Anordnung nach Anspruch 1, **dadurch gekennzeichnet, dass** in dem inneren und äußeren Element Lagerlaufflächen für Wälzkörper des Lagers ausgebildet sind.

7. Anordnung nach einem der vorhergehenden Ansprüche, **dadurch gekennzeichnet, dass** das Drehmomentbegrenzungselement auf einer Außenfläche (14d) der Freilaufeinrichtung angeordnet ist.

8. Anordnung nach einem der Ansprüche 1 bis 8, **dadurch gekennzeichnet, dass** das Drehmomentbegrenzungselement in einem zylindrischen Innenraum der Freilaufeinrichtung angeordnet ist.

9. Anordnung nach einem der vorhergehenden Ansprüche, **dadurch gekennzeichnet, dass** das Drehmomentbegrenzungselement einen offenen elastischen Ring enthält, der mit einer äußeren Reibfläche und einer inneren Reibfläche versehen ist.

10. Anordnung nach Anspruch 11, **dadurch gekennzeichnet, dass** der Ring aus Stahlblech hergestellt ist und einen U-förmigen Querschnitt aufweist, der mit zwei axialen Flügeln versehen ist.

11. Anordnung nach einem der vorhergehenden Ansprüche, **dadurch gekennzeichnet, dass** das Drehmomentbegrenzungselement eine Reihe von elastischen Zungen (19a) aufweist.

12. Anordnung nach einem der vorhergehenden Ansprüche, **dadurch gekennzeichnet, dass** das Drehmomentbegrenzungselement einen aus Kunststoff hergestellten elastischen Ring (18) enthält, der mit einer äußeren oder inneren Reibfläche und einer inneren bzw. äußeren Befestigungsfläche ausgebildet ist.

13. Anordnung nach einem der vorhergehenden Ansprüche, **dadurch gekennzeichnet, dass** das Drehmomentbegrenzungselement wenigstens einen Reibring (23) und eine Federscheibe (25) enthält, um den Reibring auf einer Reibfläche in axiale Anlage zu bringen.

14. Anordnung nach einem der Ansprüche 1 bis 9, **dadurch gekennzeichnet, dass** das Drehmomentbegrenzungselement einen Grundkörper in Form eines offenen Ringes enthält.

15. Anordnung nach Anspruch 14, **dadurch gekennzeichnet, dass** das Drehmomentbegrenzungselement außerdem ein elastisches Element enthält, das dazu dient, den Grundkörper vorzuspannen.

16. Anordnung nach einem der vorhergehenden Ansprüche, **dadurch gekennzeichnet, dass** die Freilaufeinrichtung eine Feder enthält, die ein mit dem Drehmomentbegrenzungselement fest verbundenes Ende und Windungen aufweist, die mit dem inneren oder äußeren Element gleitend in Berührung stehen.

17. Anordnung nach einem der vorhergehenden Ansprüche, **dadurch gekennzeichnet, dass** die Klemmkörper der Freilaufeinrichtung Nocken, Rollen oder Sperrklinken sind.

18. Anordnung nach einem der vorhergehenden Ansprüche, **dadurch gekennzeichnet, dass** das Drehmomentbegrenzungselement ein Reibelement und ein Element enthält, das dazu dient, das Reibelement gegen den Ring (14) und/oder das äußere Element (5) oder gegen das innere Element vorzuspannen.

19. Anordnung nach einem der vorhergehenden Ansprüche, **dadurch gekennzeichnet, dass** das Drehmomentbegrenzungselement zwischen zwei distinkten Elementen vorgespannt ist.
